(19) Europäisches Patentamt
European Patent Office
Office européen des brevets

(11) Publication number: **0 399 017 B1**

(12) **EUROPEAN PATENT SPECIFICATION**

(45) Date of publication of patent specification: **06.07.94**

(51) Int. Cl.[5]: **C08B 37/00**, A61K 31/725, A23L 1/30

(21) Application number: **89913096.7**

(22) Date of filing: **23.11.89**

(86) International application number: **PCT/HU89/00055**

(87) International publication number: **WO 90/05750 (31.05.90 90/12)**

The file contains technical information submitted after the application was filed and not included in this specification

# (54) BASIC METAL COMPLEXES OF ACIDIC OLIGO- AND POLYSACCHARIDES AND FRUIT AND VEGETABLE PRODUCTS AND PHARMACEUTICAL COMPOSITIONS COMPRISING SUCH COMPLEXES.

(30) Priority: **23.11.88 HU 603688**
**16.12.88 HU 644788**
**16.12.88 HU 644888**

(43) Date of publication of application: **28.11.90 Bulletin 90/48**

(45) Publication of the grant of the patent: **06.07.94 Bulletin 94/27**

(84) Designated Contracting States: **AT BE CH DE ES FR GB IT LI LU NL SE**

(56) References cited:
**EP-A- 0 136 502**
**DE-A- 3 228 231**
**GB-A- 1 328 088**
**US-A- 4 225 592**
**US-A-24 188 866**

(73) Proprietor: **MTA Központi Kémiai Kutato Intézete**
**Pusztaszeri u. 59/67**
**H-1025 Budapest(HU)**

(72) Inventor: **LAKATOS, Béla**
**Tartsay Vilmos u. 17**
**H-1126 Budapest(HU)**
Inventor: **SANDOR, Zoltán**
**Keleti Károly u. 21**
**H-1025 Budapest(HU)**
Inventor: **TÖLGYES, Margit**
**Hunyadi u. 12**
**H-2626 Nagymaros(HU)**
Inventor: **KOVACS, Zsuzsa**
**Columbus u. 18**
**H-1145 Budapest(HU)**
Inventor: **VINKLER, Péter**
**Szellö u. 10**
**H-1035 Budapest(HU)**

**EP 0 399 017 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Römps-Chemie-Lexikon, 9.Auflage 1989, Tichwort "Alginsäure.

Gmelin Handbuch der Organischen Chemie, 8.Auflage, Band Mangan D2, Springer Verlag, Berlin 1980, Seite 50.

Inventor: **KRÖEL, Dulay, N ra**
**Kutvölgyi u. 67**
**H-1125 Budapest(HU)**

(74) Representative: **Beszédes, Stephan G., Dr.**
**Patentanwalt**
**Postfach 11 68**
**D-85201 Dachau (DE)**

## Description

The invention relates to metal complexes - containing basic groups, in particular hydroxy, hydrocarbonate and/or carbonate ligands - of acidic oligo- and polysaccharides. The invention is also concerned with pharmaceutical compositions, fruit-containing gels and fruit and vegetable juices comprising such metal complexes. Furthermore, the invention relates to a process for preparing these basic metal complexes from acidic oligo- and polysaccharides.

It is well known that alkali metal ions (such as $Na^+$, $K^+$, $Li^+$), alkaline earth metal ions (such as $Mg^{2+}$, $Ca^{2+}$, $Sr^{2+}$) and transition metal ions with 3d orbitals (such as $Cr^{3+}$, $Mn^{2+}$, $Fe^{2+/3+}$, $Co^{2+}$, $Zn^{2+}$, $Ni^{2+}$, $Cu^{2+}$, $VO^{2+}$, etc.) are indispensible factors for the normal functions of living organisms. These metal ions are termed in the following as "essential metal ions". Essential metal ions are components or activators of numerous enzyme systems, they are in close correlation with the level of certain vitamins in the living organism, and have an essential influence on the functioning of hormone systems. Any deficiency in essential metal ion level may involve a decrease in the synthesis of important proteins, enzymes, hormones and other biologically active substances which regulate the normal functions of the whole living organism.

It is also well known that the essential metal ion content of foodstuffs of plant and animal origin shows a steadily decreasing tendency. The reason for this fact is that owing to increasingly intense plant cultivation, the macro- and microelement resources of soil available for plants steadily decrease, and the processing, purifying and refining techniques applied in foodstuff industry further decrease the low initial essential metal ion content of the raw materials.

The daily average trace element intake per capita calculated from the average trace element content of foodstuffs available in Hungary and from the average foodstuff consumption per capita [Szotyori-Lindner, K. and Gergely, A.: Nahrung 28, 789-796 (1984)] compared to the recommended amounts [Schelenz, R.: "Dietary recommendation for trace element intake" in Trace Element - Anal. Chem. in Medicine and Biology 4, 79-105 (ed.: Brätter, P. and Schramel, D.; issued by W. de Grüntner and Co., Berlin - New York /1987/)] is given in Table I.

Table I

| Element | Average intake from foodstuff in 1980 (mg/day) | Recommended values (mg/day) | | |
|---|---|---|---|---|
| | | Adults | Pregnants | Sportsmen |
| Cu | 0.95 | 2-5 | 8 | 4-8 |
| Zn | 10.57 | 12-15 | 20-25 | 15-20 |
| Fe | 9.75 | 10-18 | 45-48 | 15-20 |
| Mn | 1.21 | 2-9 | 12 | 10 |
| Co | 0.1 | 0.03-0.3 | 0.3 | 0.01-0.012 |
| Ni | 0 | 0.16 | 0.1 | 0.1 |
| Cr | 0.11 | 0.1-0.3 | 0.2 | 0.2 |
| Mo | 0 | 0.1-0.5 | 0.5 | 0.1-0.5 |
| Mg | 200 | 420-700 | 700-1200 | 400-500 |

The data of Table I indicate that the trace element intake available from foodstuff is much less than necessary, thus trace elements (essential metal ions) should be supplemented from other resources.

It is well known that trace element intake can be increased by incorporating essential metal ions into foodstuffs or by administering essential metal ion-containing pharmaceutical compositions. According to the earliest methods, essential metal ions were administered orally in the form of inorganic salts or simple organic salts either as a foodstuff supplement or as a pharmaceutical composition [J. Am. Dietetic Assoc. 59, 27 (1971)]. However, in the living organism, these inorganic salts or simple organic salts and metal complexes of low stability constant (such as lactates, acetates, etc.) form sparingly soluble compounds with the other foodstuff components or digestion products thereof, and in this form they are excreted from the organism without any notable biological utilization. As a further disadvantage, these simple metal salts have generally an unpleasant taste which strongly restricts the amount of metal salts introducible into foodstuffs. Moreover, the metal salts catalyze the decomposition of the majority of oxidizable vitamins present in foodstuffs. Ferrous sulfate, which is frequently utilized as metal salt additive optionally in combination with vitamin C, produces free -OH and $-HO_2$ radicals under aerobic conditions, which may lead to undesired side effects particularly upon prolonged administration.

It has also been attempted to apply essential metal ions in the form of their amino acid complexes with medium stability constants as foodstuff supplements. However, such metal complexes of amino acids do not build into the glyco-protein or protein system of the carrier foodstuff in unchanged form, but they dissociate first and are then metabolized separately. Under such conditions, like the simple metal salts, they convert into sparingly soluble compounds and are excreted from the organism without any notable biological effect.

On the other hand, essential metal ion complexes with high stability constants (such as citrates and EDTA complexes) are useless as essential metal ion resources, since, owing to the high stability of the complexes, they are unable to pass their metal ion content to the living organism.

Subsequent investigations revealed that the problems connected with the biological metabolism and utilization of essential metal ions can be mostly overcome when they are introduced into the living organism in the form of appropriately selected biopolymer - metal chelates.

The use of humic acid, alginic acid, pectin or degraded casein as biopolymer was suggested by Hungarian Patent No. 158,252, Japanese Patent No. 13,090 and Belgian Patents Nos. 619,267 and 652,508. It is a disadvantage, however, that the starting biopolymers are not chemically well defined substances but materials highly varying in composition thus in metal binding capacity, too, consequently they do not enable one to prepare metal complexes in a reproducible manner with stable composition and steady quality. Considering the increasingly severe quality prescriptions set up in connection with foodstuffs, these biopolymer - metal complexes cannot be applied as foodstuff supplements.

According to Yakugaku Zasshi 90, 120-126 and 1480--1487 (1970) chondroitine sulfate is applied as biopolymer. Although this compound is a well defined substance from both chemical and biological aspects, its natural resources are rather limited, and the separation and purification of the biopolymer is a very sophisticated and laboursome operation. Thus, owing to the high production expenses, these biopolymer - metal complexes have only a rather restricted use in the mass production of foodstuffs.

The preparation and biological effects of essential metal ion complexes of oligo- and polygalacturonic acids are disclosed in J. Polymer Sci. 10, 287-293 (1972) and in Hungarian Patent No. 172,831. These metal complexes have the structural characteristic that the essential metal ions are connected to the $-COO^-$ and sugar -OH groups of the polygalacturonate skeleton, thus the bivalent essential metal ions link two, and the trivalent essential metal ions link three poly-galacturonate chains. Although polygalacturonic acid utilized as biopolymer is a chemically well defined and easily available substance, thus it can be regarded as an ideal "support" for metal ions, it is a disadvantage that the essential metal ions metabolize rather slowly from these metal complexes. The greater the molecular weight of polygalacturonic acid, the slower the metabolization rate of the metal ion. This is most clearly demonstrated by the fact that metal complexes formed with polygalacturonic acids with a polymerization degree higher than 150 are no more applied to introduce essential metal ions into the organism but to remove toxic metal ions (such as lead or radioactive strontium) from the organism [Chem. Abstr. 83, 88173f (1975)]. Metal complexes formed with polygalacturonic acids with a polymerisation degree of 10 to 145 are still able to pass their metal ion content to the organism. Considering, however, that two or three poly-galacturonic acid chains should be split in order to liberate the metal ion, this proceeds under biological conditions rather slowly and the decomposition is sometimes incomplete. As a further disadvantage, these polygalacturonate - metal complexes are difficult to incorporate into the raw materials of food industry; the homogenization of small amounts of complex supplements is particularly difficult. The above polygalacturonate - metal complexes are sparingly soluble in water, thus they can be added to juices and beverages only in small amounts, and they segregate from the liquid after a more or less prolonged storage.

From US-A-4,225,592, particularly Examples 8 and 9 it has been known the preparation of complexes of oligo- and polygalacturonic acids formed with essential metal ions, such as manganese(II)-potassium-decagalacturonate and magnesium(II)-potassium(I)-decagalacturonate coprecipitate, by alcalinizing the decagalacturonic acid solution (Example 8) or the entire reaction mixture ( Example 9) with potassium hydroxide. The reaction is carried out at pH values of 3.0 to 8.0, specifically in Example 8 at 8.0. From this reference also there have been known fruit juices containing the said products.

In EP-A-136 502, particularly Examples 1 to 4, it has been described the preparation of iron(II), zinc and magnesium salts of alginic acid by reacting the sodium salt of the polysaccharide with a metal salt solution neutralized with sodium hydroxide at pH values of 5.0 to 8.0 the highest pH value indicated in the Examples being 7.4.

From DE-A-32 28 231, particularly Examples 1 and 2, it has been known to prepare calcium salts of polysaccharides, such as calcium alginate and calcium pectate, by reacting the sodium salt of the polysaccharide with a metal salt solution neutralized with sodium hydroxide at pH-values of 5.0 to 8.0. In this reference also there have been described fruit-containing gels containing the said products as gelling

agents.

However, the metal complexes of polysaccharides of the said references contain at most only a small number of hydroxy groups bound to metal.

Now it has been found that when basic metal complexes prepared from acidic polysaccharides in which the complexed metal ions or any desired proportion of them are attached with at least one of their valences to the -$COO^-$ groups of the acidic polysaccharide skeleton and at the same time these metal ions are attached with at least one further valence to a hydroxy, carbonate or hydrocarbonate ligand, contain a greater number of hydroxy groups bound to metal from them the metal ions liberate with an increased rate under biological conditions and the complexes pass their complete metal ion content to the living organism in biologically utilizable form. This latter recognition is very surprising, since it was to be expected that in the presence of the basic ligands (hydroxy, carbonate and hydrocarbonate ligands) the metal ions would form less soluble compounds than those formed from neutral complexes which would involve a considerable loss in their biological utility. Our practical experiences are, however, in a full contrast with these expectations.

It has also been found that these basic metal complexes, when admixed with fruit or vegetable juices or fruit-containing gels, exert favourable stabilizing, consistency-improving and galling effects without any decrease in their biological value. Thus these basic metal complexes can be applied to advantage as supplements for fruit or vegetable juices or fruit-containing gels. Formulae (I) to (VII) mentioned below are depicted in the drawings.

Based on the above, a subject-matter of the invention are basic metal complexes of acidic oligo- and polysaccharides corresponding to formula

$$\left\{\left[M^{z+}\bar{Ps}_{(z-(a_1+a_2+2a_3))}(OH^-)_{a_1}(HCO_3^-)_{a_2}(CO_3^{2-})_{a_3}\right](M^+\bar{Ps})_x(Ps)_y\right\}_n \quad (I)$$

wherein

| | |
|---|---|
| $M^{z+}$ | is an alkaline earth metal ion and/or a transition metal ion with 3d orbital, including positive ions composed of such transition metal ions and oxygen atoms, |
| z | is equal to 2 or 3 and is the charge number of the cation $M^{z+}$, |
| $M^+$ | is an alkali metal ion, |
| $Ps^-$ | represents a monomeric unit of an acidic oligo- or polysaccharide chain comprising one carboxylate group, |
| Ps | represents one neutral saccharide monomeric unit of an acidic oligo- or polysaccharide chain, |
| $a_1$ | is the stoichiometric coefficient of the hydroxy ligands, |
| $a_2$ | is the stoichiometric coefficient of the hydrocarbonate ligands, |
| $a_3$ | is the stoichiometric coefficient of the carbonate ligands, |
| x and y | are the stoichiometric coefficients of the individual structural units of the saccharide chain, and |
| n | is the polymerization degree of the polysaccharide chain built up from the above structural units, |

with the proviso that any one of $a_1$, $a_2$ and $a_3$ may be equal to zero and the sum of $a_1$, $a_2$ and $2a_3$ is $0.7\cdot(z-1)$ or greater and the maximum value of the sum of $a_1$, $a_2$ and $2a_3$ is equal to z-1.

The term "acidic oligo- or polysaccharide" as used in the specification and claims refers to oligo- or polysaccharides in which carboxy groups are attached to at least a part of the saccharide monomeric units present. Thus, $Ps^-$ in formula (I) denotes the saccharide monomeric units with carboxylate anions. For polygalacturonic acid $Ps^-$ is a group of formula (II).

Stoichiometric coefficiants $a_1$, $a_2$ and $a_3$ in formula (I) indicate the average number of hydroxy, hydrocarbonate and carbonate ligands, respectively, pro one $M^{z+}Ps^-$ saccharide monomeric unit. Any of stoichiometric coefficients $a_1$, $a_2$ and $a_3$ may be equal to zero (in this instance the compound of formula (I) does not contain the basic ligand in question), but the sum of $a_1$, $a_2$, and $a_3$ is always a positive value, and - in accordance with electroneutrality - the sum of $a_1 + a_2 + 2a_3$ can not exceed z-1. If a compound of formula (I) contains only hydroxy groups as basic ligands and they are present in the maximum possible amount, i.e. $a_1$ = z-1, and the polysaccharides component is polygalacturonic acid, the structure of the monomeric units comprising a bivalent metal ion corresponds to formula (III), and the structure of

monomeric units comprising a trivalant metal ion corresponds to formula (IV). The formulae of the metal ion-containing monomeric units of the compounds of formula (I) comprising as basic ligands only hydrocarbonate or carbonate ligands in the maximum possible amounts can be drawn similarly. If the value of the difference z - ($a_1 + a_2 + 2a_3$) is a fraction between 1 and 2 (for trivalent $M^{z+}$ metal ions a fraction between 1 and 3) this means that basic ligands are attached only to a part of metal ions $M^{z+}$ present in the molecule; the remaining $M^{z+}$ ions link two or three polysaccharides chains e.g. as shown in formulae (V), (VI) or (VII).

In other terms the definition that the value of sum $a_1 + a_2 + 2a_3$ is 0.7 (z-1) means that basic ligands are attached to at least 70% of the $M^{z+}$ metal ions present in the molecule.

Stoichiometric coefficeint x in formula (I) indicates the average number of acidic saccharides monomeric units comprising a carboxylate anion neutralized with an alkali metal ion (i.e. a saccharide monomeric unit of formula $Ps^-M^+$) pro one $M^{z+}Ps^-$ acidic saccharide monomeric unit. Depending on the preparation conditions, in particular, on the molar ratio of the alkali metal compounds to two- or trivalent metal compounds, the value of x in the compounds of formula (I) can be adjusted to any pre-determined value, and even compounds of formula (I) with x equal to zero can be prepared. In the compounds of formula (I) alkali metal ion $M^+$ present in the acidic saccharide monomeric units $Ps^-M^+$ is preferably potassium, and x is preferably less than one.

Stoichiometric coefficient y in formula (I) indicates the average number of neutral saccharides monomeric units (Ps) pro one $M^{z+}Ps^-$ acidic saccharides monomeric unit. The number of neutral saccharides monomeric units depends on the chemical nature of the starting oligo- or polysaccharide; thus, in principle (for a polysaccharide comprising only acidic saccharide monomeric units), the value of y may be zero. The neutral saccharide monomeric unit may be e.g. a galactose unit.

Symbol $M^{z+}$ in formula (I) cover, in addition to the alkaline earth metal ions and transition metal ions with 3d orbital, the positive ions composed of transition metal ions and oxygen atoms, such as the $V0^{2+}$ ion, too.

In formula (I) $Ps^-$ may represent e.g. a galacturonate, glycuronate, alginate or hyaluronate unit.

The invention also relates to a method for the preparation of a metal complex of formula (I). According to the invention one proceeds as follows:

a) an alkali metal salt of an acidic oligo- or polysaccharide is reacted, preferably directly in the reaction mixture where it is formed, with a salt of a metal ion $M^{z+}$ formed with an inorganic anion or with a complex of a metal ion $M^{z+}$ of lower stability constant than that of the acidic polysaccharide-metal ion complex, formed with an organic ligand, the reaction being performed

i) for the introduction of a bivalent metal ion $M^{z+}$ in the presence of 0.1-1.1 molar equivalents of an alkali metal hydroxide, carbonate and/or hydrocarbonate calculated for one molar equivalent of the starting oligo- or polysaccharide alkali metal salt, or

ii) for the introduction of a trivalent metal ion $M^{z+}$ in the presence of 0.1-2.1 molar equivalents of an alkali metal hydroxide, carbonate and/or hydrocarbonate calculated for one molar equivalent of the starting oligo- or polysaccharide alkali metal salt,

and said salt or complex of metal ion $M^{z+}$ is utilized in an amount of 0.7-1.1 equivalents calculated for the total amount of alkali metal compounds present; or

b) an acidic oligo- or polysaccharide is reacted, either as such or as its ester or partial ester, with the oxide, hydroxide, carbonate or hydrocarbonate of metal ion $M^{z+}$ to be introduced, said compound of metal ion $M^{z+}$ being applied

(i) for the introduction of a bivalent metal ion $M^{z+}$ in an amount of 0.55-1 metal atom calculated for one carboxy group or esterified carboxy group present, or

(ii) for the introduction of a trivalent metal ion $M^{z+}$ in an amount of 0.36-1 metal atom calculated for one carboxy group or esterified carboxy group present,

and if desired, any esterified carboxy group present is saponified with an alkali metal oxide, hydroxide, hydrocarbonate or carbonate,

with the proviso that the amount of metal hydroxide, carbonate and/or hydrocarbonate employed in processes a) and b) above is adjusted such as to ensure that the sum of $a_1 + a_2 + 2a_3$ in the product of formula (I) is $0.7 \cdot (z-1)$ or greater.

The oligo- or polysaccharide alkali metal salt utilized as starting substance in method a) is prepared either from the acidic (-COOH containing) oligo- or polysaccharide or from the natural precursor of the acidic oligo- or polysaccharide which contains the -C00H groups as methyl esters. This latter method is particularly preferred. Of the natural precursors pectin is mentioned as an example, which is a natural polymer built up from methyl galacturonate units. The alkali metal salt of oligo- or or polysaccharide, obtained upon the saponification of the ester groups of the precursor with an alkali metal base, is preferably not isolated from the reaction mixture, but is reacted directly, in the presence of a further amount of an

alkali metal hydroxide, carbonate and/or hydrocarbonate, as defined in points a(i) or a(ii) above, with the salt or complex of low stability constant comprising the metal ion $M^{z+}$ to be introduced. Of the salts of metal ion $M^{z+}$, those formed with mineral acids, such as the chlorides und sulfates, are preperred. Of the complexes of metal ion $M^{z+}$ with low stability constant, the acetates are to be mentioned.

In this method, by varying the amount of the salt or complex, of low stability constant comprising metal ion $M^{z+}$, the ratio of structural units comprising metal ion $M^{z+}$ ($M^{z+}Ps^-$) to structural units comprising $M^+$ alkali metal ions ($M^+Ps^-$) can be adjusted in the product to any predetermined value. When the salt or complex of low stability constant comprising metal ion $M^{z+}$ is applied in an amount corresponding to or close to the upper limit given above, a product comprising only a small amount of $M^+Ps^-$ structural units (i.e. a compound of formula (I) with x much less than one) is obtained. Upon decreasing the amount of the salt or complex of low stability constant comprising metal ion $M^{z+}$, the proportion of $M^+Ps^-$ structural units increases.

Similarly, by varying the amount of alkali metal hydroxide, carbonate and/or hydrocarbonate, the value of difference $z - (a_1 + a_2 + 2a_3)$ can be adjusted in the product to any pre-determined value complying with the above definitions. The greater the amount of alkali metal hydroxide, carbonate and/or hydrocarbonate utilized, the closer the value of the above difference to one, i.e. the greater the proportion of structural units of the types shown in formulae (III), (IV) and (VII) among the structural units comprising metal ion $M^{z+}$ and the smaller the proportion of structural units shown in formulae (V) and (VI).

It should be noted that in this method salts or complexes with low stability constant of more than one metal ion $M^{z+}$ can also be applied. In this instance complexes comprising two or more bi- or trivalent metal ions $M^{z+}$ (optionally together with alkali metal ions) in one and the same molecule are obtained. It has been observed that the biological effects of such complexes comprising two or more essential metal ions linked to one and the same molecule is much more advantageous than those of the physical mixtures comprising only a single type of an essential metal ion $M^{z+}$.In these "multimetal complexes" the ratio of the individual metal ions $M^{z+}$ can be adjusted to any desired value upon the appropriate choice of the ratio of the starting metal salt or metal complex reactants and by adjusting the pH, the temperature and the ionic strength of the reaction mixture to the appropriate values. In this way complexes with metal compositions most suitable to treat a given disease or disorder can be obtained. Multimetal complexes can be used to great advantage e.g. in the treatment of anaemia, since in this bay all of the essential metal ions required in the treatment (iron, copper, cobalt, manganese, zinc, nickel, chromium, magnesium and potassium) can be introduced into the organism as a single composition.

The alkali metal salt formed in the reaction can be removed from the resulting compound of formula (I) by aqueous washing.

According to method b) of the invention the acidic oligo- or polysaccharides themselves, their natural (fully esterified) precursors or the partial esters formed upon the partial hydrolysis of the natural precursors can equally be applied as starting substances. If only or mainly trivalent metal ions $M^{z+}$ are to be introduced, it is preferred to apply fully or almost fully hydrolysed starting substances, i.e. starting substances without esterified carboxy groups or with esterified carboxy groups only in small amounts. The starting substance is reacted with the oxide, hydroxide, carbonate or hydrocarbonate of the metal ion $M^{z+}$ to be introduced in an aqueous medium. In some instances the reactant (e.g. the metal oxide or hydroxide) can be formed directly in the reaction medium from the appropriate metal. Like method a), method b) can also be applied to form multimetal complexes. When a multimetal complex is to be prepared by utilizing metal reactants with different reactivities, the reactants are added to the reaction mixture in the order of increasing reactivity (i.e. first the less reactive and last the most reactive compound is introduced).

If desired, any esterified group present in the molecule can be saponified with an alkali base after the introduction of metal ions $M^{z+}$, whereupon structural units $M^+Ps^-$ are formed in the resulting compound of formula (I). If the molecule still contains esterified carboxy groups which are not saponified, these structural units with esterified carboxy groups are regarded as neutral saccharide structural units (Ps) in formula (I). Consequently, in method b) the ratio of the individual structural units can be varied by the appropriate selection of the esterification degree of the starting substance, by varying the amount of the compound comprising metal ion $M^{z+}$ and by subjecting or not subjecting the product to subsequent saponification.

An advantage of method b) over method a) is that no by-product to be removed (alkali metal salt) is formed. Some metal ions, such as $Cu^{2+}$ ions, are, however, difficult to introduce into the polysaccharide molecule by method b), since the reactivity of the respective reactant (such as CuO) is too low. Therefore, to introduce such metal ions into the molecule, it is preferred to apply method a).

The compounds of formula (I) can be converted into pharmaceutical or veterinary compositions by well known pharmacotechnological methods, utilizing conventional pharmaceutically acceptable carriers, diluents and/or other auxiliary agents. These pharmaceutical or veterinary compositions are also within the scope of

the invention.

As mentioned above, the invention also relates to fruit and vegetable juices supplemented with an essential metal ion source. The fruit and vegetable juices according to the invention comprise, beside sugar or an artificial sweetener and any optional usual additive (such as water, a preservative, etc.), a compound of formula (I) in an amount of 0.1-1 % by weight calculated for the total weight of the mixture.

It has been observed that the compounds of formula (I) not only provide an essential metal ion source, but also exert a favourable consistence-improving and stabilizing effect on the fruit and vegetable juice. In the presence of a compound of formula (I) the sedimentation of fibres from fibrous juices becomes considerably slower, and a beverage with pleasant "full" taste is obtained.

These observations are particularly surprising in the light that the compounds of formula (I) themselves are sparingly water-soluble. This stability-increasing effect of the compounds of formula (I) can be attributed presumably to the fact that the basic ligands coupled to metal ions $M^{z+}$ (i.e. the hydroxy, carbonate or hydrocarbonate groups) enter into chemical reactions with the weak acids present in fruit and vegetable juices (such as malic acid, tartaric acid, succinic acid, etc.). The -OH anions attached to metal ions $M^{z+}$ are also able to form hydrogen bonds. As a net result of these reactions the oligo- or polysaccharide metal complexes of formula (I) convert into protective colloid-like substances, which do not segregate from the beverages and also impede the sedimentation of other floating particles (e.g. fibres). It is also particularly surprising that from these protective colloid-like substances with metal bridges in their structure the essential metal ions liberate quickly, easily and fully under biological conditions. On the basis of the experiences on the metabolism conditions of polygalacturonate metal complexes disclosed in Hungarian patent No. 172,831, one had to conclude that if the small basic ligands attached to the metal ions $M^{z+}$ are replaced by bulky acidic organic groups, this would considerably slow down or even stop the transport of metal ions into the living organism.

The term "fruit and vegetable juice" as used in the specification and claims covers all kinds of beverages comprising natural fruit or vegetable juice or pulp, optionally together with a diluent (such as water) or optionally enriched with carbon dioxide.

The fruit and vegetable juices supplemented with an essential metal ion source are prepared according to the invention in such a way that fruit juice, fruit pulp, vegetable juice and/or vegetable pulp is admixed, either under aseptic conditions or in the presence of a preservative, with sugar or an artificial sweetener, with a compound of formula (I) and optionally with one or more conventional additives (such as water, flavouring agent/s/, colouring agent/s/, etc.). Considering that the compound of formula (I) introduced reacts with the weak fruit acids present in the beverage, it is sometimes necessary to add an organic acid in order to adjust the pH of the juice to the pre-determined value and to ensure the required harmonic flavour. Citric acid cannot be applied as organic acid, since it forms a very stable complex with metal ions from which they cannot liberate under biological conditions. Thus, if necessary, it is preferred to add malic acid or tartaric acid to the juices supplemented with a compound of formula (I).

The invention also relates to fruit-containing gels supplemented with an essential metal ion source. These fruit-containing gels comprise as gellifying agent a 10:1 - 1:10 w/w mixture of a compound of formula (I) and of a conventional gellifying agent.

The term "fruit-containing gel" as used in the specification and claims covers fruit jellies, jams and all other gel-like fruit products, too.

As known, such fruit-containing gels are prepared by adding a gel-forming agent to the mixture of fruit pulp, sugar, water and other optional additives (such as artificial sweeteners, preservatives, colourants, etc.) in order to provide the required gellous consistency. To prepare fruit-containing gels with low sugar and high water content (recommended generally for diabetic persons) usually carragenates are utilized as gel-forming agents, which are sulfated (i.e. $-SO_3H$ containing) polysaccharide derivatives. The most frequent gel-forming agent applied to prepare gels with high sugar and low water content is pectin, which is a polygalacturonate derivative comprising neutral sugar molecules in the polymeric chain and bearing various side chains attached to the sugar -OH groups, wherein all of the carboxy groups are present as methyl esters.

It has been observed that the compounds of formula (I) can be applied not only as essential metal ion supplements for such fruit-containing gels but, owing to their good gel-forming properties, they can also replace a part (10 to 90%) of the conventional gel-forming agents utilized in the preparation of fruit-containing gels. Fruit-containing gels comprising a compound of formula (I) are more elastic and more stable than those comprising only conventional gel-forming agents, and they contain all the essential ions in a form easily transportable to the living organism.

These observations are rather surprising. If $Ps^-$ in formula (I) represents a galacturonic acid unit, a compound of formula (I) can be regarded as a pectin analogue which does not comprise the structural

elements of pectin essential for gel formation (i.e. the methyl groups attached to the carboxy groups and the side chains attached to the sugar -OH groups). On this basis no gel-forming effect was to expected from the compounds of formula (I). On the other hand, compounds of formula (I) comprise basic anions (hydroxy, carbonate and hydrocarbonate ions) attached to metal ions $M^{z+}$. The excellent consistency-improving (gellifying) effect of the compounds of formula (I) and the high compatibility of these compounds with fruit-containing gels can be attributed presumably to the fact that, as mentioned before, the basic ligands attached to metal ions $M^{z+}$ enter into chemical reactions with the weak acids present in fruit-containing gels, with the $-SO_3H$ groups of carragenates or with the free acidic groups of pectin applied as gelling agents. The -OH anions attached to metal ions $M^{z+}$ are also able to form hydrogen bonds. As a net result of these interactions, an elastic, cross-linked gel-forming system is obtained. It is also particularly surprising that from this cross-linked gel-forming system the essential metal ions liberate quickly, easily and completely under biological conditions, since, as mentioned above, one had to expect a considerable retardation or even stopping of the transport of metal ions into the living organism.

The fruit-containing gels supplemented with an essential metal ion source are prepared according to the invention in such a way that fruit pulp is admixed warm, either under aseptic conditions or in the presence of a preservative, with sugar, water, a gelling agent and optionally with one or more conventional additive(s), and the mixture is allowed to cool. According to the invention a 10:1 to 1:10 w/w mixture of a conventional gelling agent and of a compound of formula (I) is utilized as gelling agent.

As mentioned above, it is sometimes necessary to add an organic acid to the fruit-containing gel, since the compound of formula (I) introduced reacts with the weak fruit acids present. Organic acids other than citric acid can be applied for this purpose, since citric acid would form a very stable complex with the metal ions present, stopping thereby the metal ion transport to the living organism.

The invention is elucidated in detail by the aid of the following non-limiting Examples.

Example 1

Preparation of basic copper(II)-polygalacturonate

10 g of pectin (Genu X-6866 type obtained from Denmark, total acidic capacity: $3.88 \times 10^{-3}$ mole/g, degree of esterification: 72.6 %) are hydrolysed in distilled water with 4.35 g ($7.76 \times 10^{-2}$ mole) of potassium hydroxide, and then a solution of 9.69 g ($3.88 \times 10^{-2}$ mole) of $CuSO_4.5H_2O$ in distilled water is added. The resulting basic copper(II)-polygalacturonate gel is filtered off, washed with distilled water and dried. 12.5 g of the title compound are obtained with a dry substance content of 82.4 % by weight.

| Analytical data: | | |
|---|---|---|
| | Found, % | Theoretical, % |
| Cu | 16.25 | 19.55 |
| K | 0.89 | - |
| C | 27.76 | 31.66 |
| H | 4.95 | 3.81 |
| O | 49.05 | 44.99 |
| N | 1.10 | - |
| S | 0.00 | - |

Example 2

Preparation of basic chromium(III)-polygalacturonate

10 g of pectin with the quality given in Example 1 are hydrolysed with 6.56 g ($1.17 \times 10^{-2}$ mole) of potassium hydroxide in distilled water, and then a solution of 10.39 g ($3.9 \times 10^{-2}$ mole) of $CrCl_3.6H_2O$ in distilled water is added to the mixture. The resulting basic chromium(III)-polygalacturonate gel is filtered off, washed with distilled water and dried. 12.72 g of the title compound are obtained with a dry substance content of 87.45 % by weight.

| Analytical data: | | |
|---|---|---|
| | Found, % | Theoretical, % |
| Cr | 15.97 | 15.73 |
| K | 2.69 | - |
| C | 25.94 | 31.13 |
| H | 4.95 | 4.05 |
| O | 48.58 | 49.08 |
| N | 1.54 | - |
| Cl | 0.33 | - |

Example 3

Preparation of basic iron(III)-polygalacturonate

15 g of pectin with the quality given in Example 1 are hydrolysed with 9.85 g ($1.755 \times 10^{-1}$ mole) of potassium hydroxide in distilled water, and then a solution of 15.81 g ($5.85 \times 10^{-2}$ mole) of $FeCl_3.6H_2O$ in distilled water is added to the reaction mixture. The resulting basic iron(III)-polygalacturonate gel is filtered off, washed with distilled water and dried. 16.4 g of the title compound are obtained with a dry substance content of 91.20 % by weight.

| Analytical data: | | |
|---|---|---|
| | Found, % | Theoretical, % |
| Fe | 16.78 | 16.70 |
| K | 0.28 | - |
| C | 27.75 | 30.78 |
| H | 4.48 | 4.00 |
| O | 48.80 | 48.52 |
| N | 1.55 | - |

Example 4

Preparation of basic manganese(II)-copper(II)-zinc(II)-polygalacturonate

6 g of pectin (total acidic capacity: $3.74 \times 10^{-3}$ mole/g) are hydrolysed with 1.889 g ($3.36 \times 10^{-2}$ mole) of potassium hydroxide in distilled water, and then 0.698 g ($5.049 \times 10^{-3}$ mole) of potassium carbonate are added to the mixture. The resulting mixture is vigorously stirred, and a homogeneous solution of 1.677 g ($6.841 \times 10^{-3}$ mole) of $Mn(CH_3COO)_2.4H_2O$, 0.923 g ($3.697 \times 10^{-3}$ mole) of $CuSO_4.5H_2O$ and 3.100 g ($1.078 \times 10^{-2}$ mole) of $ZnSO_4.7H_2O$ in distilled water is added. The metal salt solution comprises the metal ions in a weight ratio of Mn : Cu : Zn = 8 : 5 : 15. The resulting gel is filtered off, washed with distilled water and dried. 6.55 g of the title compound are obtained with a dry substance content of 93.54 % by weight.

| Analytical data: | | |
|---|---|---|
| | Found, % | Theoretical, % |
| Mn | | 5.26 |
| Cu | | 3.29 |
| Zn | | 9.86 |
| K | | - |
| C | 30.34 | 32.32 |
| H | 4.13 | 3.85 |
| O | | 45.42 |
| N | 0.31 | - |

Example 5

Preparation of basic magnesium-polygalacturonate

22.3 g of pectin with the quality as given in Example 1 are reacted, under intense stirring, with 3.33 g ($8.25 \times 10^{-2}$ mole) of magnesium oxide in distilled water. The resulting basic magnesium-polygalacturonate is filtered off and dried. 26.7 g of the title compound are obtained with a dry substance content of 90.43 % by weight.

| Analytical data: | | |
|---|---|---|
| | Found, % | Theoretical, % |
| Mg | 8.28 | 8,51 |
| C | 30.39 | 36.00 |
| H | 5.79 | 4.33 |
| O | 54.04 | 51.16 |
| N | 1.50 | - |

Example 6

Preparation of basic calcium-polygalacturonate

2.11 g of pectin with the quality as given in Example 1 are reacted, under intense stirring, with 0.437 g ($7.8 \times 10^{-3}$ mole) of calcium oxide in distilled water. The resulting basic calcium-polygalacturonate is filtered off and dried. 2.57 g of the title compound are obtained with a dry substance content of 99.79 % by weight.

| Analytical data: | | |
|---|---|---|
| | Found, % | Theoretical, % |
| Ca | 12.19 | 13.29 |
| C | 31.05 | 34.12 |
| H | 4.85 | 4.10 |
| O | 50.70 | 48.49 |
| N | 1.20 | - |

Example 7

Preparation of basic calcium-magnesium-polygalacturonate

2.11 g of pectin with the quality as given in Example 1 are reacted, under intense stirring, with 0.156 g ($1.56 \times 10^{-3}$ mole) of calcium carbonate and then with 0.252 g ($6.24 \times 10^{-3}$ mole) of magnesium oxide in distilled water. The resulting basic magnesium-calcium-polygalacturonate is filtered off and dried. 2.56 g of the title compound are obtained with a dry substance content of 83.16 % by weight.

| Analytical data: | | |
|---|---|---|
| | Found, % | Theoretical, % |
| Mg | 6.72 | 6.73 |
| Ca | 2.77 | 2.77 |
| C | 29.23 | 35.61 |
| H | 5.22 | 4.28 |
| O | 54.31 | 50.60 |
| N | 1.75 | - |

Example 8

Preparation of lithium-sodium-potassium-containing basic magnesium-calcium-polygalacturonate

2.11 g of pectin with the quality as given in Example 1 are reacted, under intense stirring, with 0.105 g ($2.6 \times 10^{-3}$ mole) of magnesium oxide and 0.146 g ($2.6 \times 10^{-3}$ mole) of calcium oxide in distilled water. Thereafter 0.0364 g ($8.667 \times 10^{-4}$ mole) of $LiOH.H_2O$, $8.667 \times 10^{-4}$ mole (0.0486 g) of potassium hydroxide and 0.0347 g ($8.667 \times 10^{-4}$ mole) of sodium hydroxide are added, and the reaction is continued. The resulting product is filtered off and dried. 2.46 g of the title compound are obtained with a dry substance content of 87.65 % by weight.

| Analytical data: | | |
|---|---|---|
| | Found, % | Theoretical, % |
| Mg | 2.93 | 2.84 |
| Ca | 4.84 | 4.69 |
| Li | 0.27 | 0.27 |
| Na | 0.92 | 0.90 |
| K | 1.57 | 1.52 |
| C | 31.21 | 36.11 |
| H | 5.31 | 4.22 |
| O | 50.95 | 49.44 |
| N | 2.00 | - |

Example 9

Preparation of basic magnesium alginate

0.2192 g of alginic acid (an acidic polysaccharide consisting of D-mannuronic acid units, acidic capacity: $4.64 \times 10^{-3}$ mole/g) is reacted in distilled water, under intense stirring, with 3.806 mg ($9.4124 \times 10^{-4}$ mole) of magnesium oxide. The resulting basic magnesium alginate is filtered off and dried. 0.3127 g of the title compound are obtained with a dry substance content of 90.70 % by weight.

| Analytical data: | | |
|---|---|---|
| | Found, % | Theoretical, % |
| Mg | 8.90 | 8.94 |
| C | 31.78 | 35.62 |
| H | 4.78 | 4.12 |
| O | 54.54 | 51.31 |
| N | 0 | - |

Example 10

Preparation of fibrous pear juice

The following substances are applied to prepare 4 litres of fibrous pear juice:
1 kg of pear pulp (pH = 3.96)
0.25 kg of sugar
0.01 kg of malic acid
0.154 kg of basic magnesium-polygalacturonate suspension (dry substance content: 10 % by weight, the suspension contains 1600 mg of magnesium)
20 $cm^3$ of a 20 w/v % aqueous sodium benzoate solution
2.59 kg of water

The pear pulp is admixed with water, and then the sugar, the basic magnesium-polygalacturonate suspension and the malic acid are introduced under intense stirring. When the dissolution of sugar is complete the sodium benzoate solution is added, and the resulting juice is bottled. 0.5 litre of the resulting fibrous juice contains 200 mg of magnesium; the final pH of the juice is 3.8.

Example 11

Preparation of fibrous peach juice

The following substances are applied to prepare 6.5 litres of fibrous peach juice:
1.6 kg of peach pulp (pH = 3.9)
0.32 kg of sugar
0.016 kg of malic acid
0.205 kg of basic magnesium-polygalacturonate suspension (dry substance content: 10 % by weight, the suspension contains 1300 mg of magnesium)
5.76 g of potassium sorbate (a 20 w/v % aqueous solution)
4.25 kg of water

The fruit pulp is admixed with water, and then the sugar, the basic magnesium-polygalacturonate suspension and the malic acid are introduced under intense stirring. When the dissolution of sugar is complete the potassium sorbate solution is added, and the resulting juice is bottled. 0.5 litre of the resulting fibrous juice contains 100 mg of magnesium; the final pH of the juice is 3.5.

Example 12

Preparation of cherry jelly enriched with basic magnesium polygalacturonate

The following components are applied to prepare
100 kg of cherry jelly:
82.5 kg of cherry pulp
10.5 kg of basic magnesium-polygalacturonate suspension (dry substance content: 10 % by weight, the suspension contains 100 g of magnesium)
0.35 kg of carragenate (Genuél UE quality)
0.1 kg of potassium sorbate (as a 20 w/v % aqueous solution)
8.35 kg of sugar

The cherry pulp is warmed to 80-85 °C and the sugar is added. When the dissolution of sugar is

complete, the aqueous potassium sorbate solution, the aqueous suspension of basic magnesium-polygalacturonate and then the carragenate are added under intense stirring. After 5-15 minutes of stirring the viscous mixture is filled into jars at 60 ° C.

## Claims

**Claims for the following Contracting States : AT, BE, CH, DE, FR, GB, IT, LI, LU, NL, SE**

**1.** A metal complex of formula

$$\{[M^{z+}Ps^{-}_{[z-(a_1+a_2+2a_3)]}(OH^{-})_{a_1}(HCO_3^{-})_{a_2}(CO_3^{2-})_{a_3}](M^{+}Ps^{-})_x(Ps)_y\}_n \quad \text{(I)}$$

wherein

| | |
|---|---|
| $M^{z+}$ | is an alkaline earth metal ion and/or a transition metal ion with 3d orbital, including positive ions composed of such transition metal ions and oxygen atoms, |
| z | is equal to 2 or 3 and is the charge number of the cation $M^{z+}$, |
| $M^{+}$ | is an alkali metal ion, |
| $Ps^{-}$ | represents a monomeric unit of an acidic oligo- or polysaccharide chain comprising one carboxylate group, |
| Ps | represents one neutral saccharide monomeric unit of an acidic oligo- or polysaccharide chain, |
| $a_1$ | is the stoichiometric coefficient of the hydroxy ligands, |
| $a_2$ | is the stoichiometric coefficient of the hydrocarbonate ligands, |
| $a_3$ | is the stoichiometric coefficient of the carbonate ligands, |
| x and y | are the stoichiometric coefficients of the individual structural units of the saccharide chain, and |
| n | is the polymerization degree of the polysaccharide chain built up from the above structural units, |

with the proviso that any one of $a_1$, $a_2$ and $a_3$ may be equal to zero and the sum of $a_1$, $a_2$ and $2a_3$ is 0.7.(z-1) or greater and the maximum value of the sum of $a_1$, $a_2$ and $2a_3$ is equal to z-1.

**2.** A process for the preparation of a metal complex of formula (I), wherein $M^{z+}$, z, $M^{+}$, $Ps^{-}$, Ps, $a_1$, $a_2$, $a_3$, x, y and n are as defined in claim 1, characterized in that

a) an alkali metal salt of an acidic oligo- or polysaccharide is reacted, preferably directly in the reaction mixture where it is formed, with a salt of a metal ion $M^{z+}$ formed with an inorganic anion or with a complex of a metal ion $M^{z+}$ of lower stability constant than that of the acidic polysaccharide-metal ion complex, formed with an organic ligand, the reaction being performed

(i) for the introduction of a bivalent metal ion $M^{z+}$ in the presence of 0.1-1.1 molar equivalents of an alkali metal hydroxide, carbonate and/or hydrocarbonate calculated for one molar equivalent of the starting oligo- or polysaccharide alkali metal salt, or

(ii) for the introduction of a trivalent metal ion $M^{z+}$ in the presence of 0.1-2.1 molar equivalents of an alkali metal hydroxide, carbonate and/or hydrocarbonate calculated for one molar equivalent of the starting oligo- or polysaccharide alkali metal salt,

and said salt or complex of metal ion $M^{z+}$ is utilized in an amount of 0.7-1.1 equivalents calculated for the total amount of alkali metal compounds present; or

b) an acidic oligo- or polysaccharide is reacted, either as such or as its ester or partial ester, with the oxide, hydroxide, carbonate or hydrocarbonate of metal ion $M^{z+}$ to be introduced, said compound of metal ion $M^{z+}$ being applied

(i) for the introduction of a bivalent metal ion $M^{z+}$ in an amount of 0.55-1 metal atom calculated for one carboxy group or esterified carboxy group present, or

(ii) for the introduction of a trivalent metal ion $M^{z+}$ in an amount of 0.36-1 metal atom calculated for one carboxy group or esterified carboxy group present,

and, if desired, any esterified carboxy group present is saponified with an alkali metal oxide, hydroxide, hydrocarbonate or carbonate,

with the proviso that the amount of metal hydroxide, carbonate and/or hydrocarbonate employed in processes a) and b) above is adjusted such as to ensure that the sum of $a_1 + a_2 + 2a_3$ in the

product of formula (I) is 0.7•(z-1) or greater.

**3.** A pharmaceutical or veterinary composition comprising as active ingredient a compound of formula (I), wherein $M^{z+}$, z, $M^+$, $Ps^-$, Ps, $a_1$, $a_2$, $a_3$, x, y and n are defined in claim 1, together with a conventional pharmaceutically acceptable carrier, diluent and/or other auxiliary agent.

**4.** A fruit juice or vegetable juice supplemented with an essential metal ion source, characterized by containing a compound of formula (I), wherein $M^{z+}$, z, $M^+$, $Ps^-$, Ps, $a_1$, $a_2$, $a_3$, x, y and n are as defined in claim 1, in an amount of 0.1-1% by weight, together with fruit or vegetable juice or pulp, sugar or an artificial sweetener, and optionally one or more conventional additive(s).

**5.** A fruit-containing gel supplemented with an essential metal ion source, comprising fruit pulp, sugar or an artificial sweetener, a gelling agent and optionally one or more conventional additive(s), characterized by containing as gelling agent a 10:1-1:10 w/w mixture of a compound of formula (I), wherein $M^{z+}$,z, $M^+$, $Ps^-$, Ps, $a_1$, $a_2$, $a_3$, x, y and n are as defined in claim 1, and of a conventional gelling agent.

**Claims for the following Contracting State : ES**

**1.** A process for the preparation of a metal complex of formula

$$\{[M^{z+}Ps^-_{[z-(a_1+a_2+2a_3)]}(OH^-)_{a_1}(HCO_3^-)_{a_2}(CO_3^{2-})_{a_3}](M^+Ps^-)_x(Ps)_y\}_n \quad (I)$$

wherein

- $M^{z+}$ is an alkaline earth metal ion and/or a transition metal ion with 3d orbital, including positive ions composed of such transition metal ions and oxygen atoms,
- z is equal to 2 or 3 and is the charge number of the cation $M^{z+}$,
- $M^+$ is an alkali metal ion,
- $Ps^-$ represents a monomeric unit of an acidic oligo- or polysaccharide chain comprising one carboxylate group,
- Ps represents one neutral saccharide monomeric unit of an acidic oligo- or polysaccharide chain,
- $a_1$ is the stoichiometric coefficient of the hydroxy ligands,
- $a_2$ is the stoichiometric coefficient of the hydrocarbonate ligands,
- $a_3$ is the stoichiometric coefficient of the carbonate ligands,
- x and y are the stoichiometric coefficients of the individual structural units of the saccharide chain, and
- n is the polymerization degree of the polysaccharide chain built up from the above structural units,

with the proviso that any one of $a_1$, $a_2$ and $a_3$ may be equal to zero and the sum of $a_1$, $a_2$ and $2a_3$ is 0.7•(z-1) or greater and the maximum value of the sum of $a_1$, $a_2$ and $2a_3$ is equal to z-1
characterized in that

a) an alkali metal salt of an acidic oligo- or polysaccharide is reacted, preferably directly in the reaction mixture where it is formed, with a salt of a metal ion $M^{z+}$ formed with an inorganic anion or with a complex of a metal ion $M^{z+}$ of lower stability constant than that of the acidic polysaccharide-metal ion complex, formed with an organic ligand, the reaction being performed

(i) for the introduction of a bivalent metal ion $M^{z+}$ in the presence of 0.1-1.1 molar equivalents of an alkali metal hydroxide, carbonate and/or hydrocarbonate calculated for one molar equivalent of the starting oligo- or polysaccharide alkali metal salt, or

(ii) for the introduction of a trivalent metal ion $M^{z+}$ in the presence of 0.1-2.1 molar equivalents of an alkali metal hydroxide, carbonate and/or hydracarbonate calculated for one molar equivalent of the starting oligo- or polysaccharide alkali metal salt,

and said salt or complex of metal ion $M^{z+}$ is utilized in an amount of 0.7-1.1 equivalents calculated for the total amount of alkali metal compounds present; or

b) an acidic oligo- or polysaccharide is reacted, either as such or as its ester or partial ester, with the oxide, hydroxide, carbonate or hydrocarbonate of metal ion $M^{z+}$ to be introduced, said compound of

metal ion $M^{z+}$ being applied

(i) for the introduction of a bivalent metal ion $M^{z+}$ in an amount of 0.55-1 metal atom calculated for one carboxy group or esterified carboxy group present, or

(ii) for the introduction of a trivalent metal ion $M^{z+}$ in an amount of 0.36-1 metal atom calculated for one carboxy group or esterified carboxy group present,

and, if desired, any esterified carboxy group present is saponified with an alkali metal oxide, hydroxide, hydrocarbonate or carbonate,

with the proviso that the amount of metal hydroxide, carbonate and/or hydrocarbonate employed in processes a) and b) above is adjusted such as to ensure that the sum of $a_1 + a_2 + 2a_3$ in the product of formula (I) is 0.7•(z-1) or greater.

**2.** A process for preparing a pharmaceutical or veterinary composition by admixing a compound of formula (I), wherein $M^{z+}$, z, $M^+$, $Ps^-$, Ps, $a_1$, $a_2$, $a_3$, x, y and n are as defined in claim 1, as active ingredient to a conventional pharmaceutically acceptable carrier, diluent and/or other auxiliary agent.

**3.** A process for preparing a fruit juice or vegetable juice supplemented with an essential metal ion source, characterized by admixing a compound of formula (I), wherein $M^{z+}$, z, $M^+$, $Ps^-$, Ps, $a_1$, $a_2$, $a_3$, x, y and n are as defined in claim 1, in an amount of 0.1-1% by weight, to a fruit or vegetable juice or pulp, sugar or an artificial sweetener, and optionally one or more conventional additive(s).

**4.** A process for preparing a fruit-containing gel supplemented with an essential metal ion source, comprising fruit pulp, sugar or an artificial sweetener, a gelling agent and optionally one or more conventional additive(s), characterized by using as gelling agent a 10:1 - 1:10 w/w mixture of a compound of formula (I), wherein $M^{z+}$, z, $M^+$, $Ps^-$, Ps, $a_1$, $a_2$, $a_3$, x, y and n are as defined in claim 1, and of a conventional gelling agent.

**Patentansprüche**

**Patentansprüche für folgende Vertragsstaaten : AT, BE, CH, DE, FR, GB, IT, LI, LU, NL, SE**

**1.** Metallkomplex der Formel

$$\{[M^{z+}Ps^-_{[z-(a_1+a_2+2a_3)]}(OH^-)_{a_1}(HCO_3^-)_{a_2}(CO_3^{2-})_{a_3}](M^+Ps^-)_x(Ps)_y\}_n \quad \textbf{(I)}$$

in der

| | |
|---|---|
| $M^{z+}$ | ein Erdalklalimetallion und/oder ein Übergangsmetallion mit 3d Orbitalen ist, einschließlich positiver Ionen, die aus solchen Übergangsmetallionen und Sauerstoffatomen bestehen, |
| z | gleich 2 oder 3 ist und die Ladungszahl des Kations $M^{z+}$ ist, |
| $M^+$ | ein Alkalimetallion ist, |
| $Ps^-$ | einen monomere Einheit einer sauren Oligo- oder Polysaccharidkette bedeutet, die eine Carboxylatgruppe enthält, |
| Ps | eine neutrale Saccharidmonomereinheit einer sauren Oligo- oder Poly saccharidkette bedeutet, |
| $a_1$ | der stöchiometrische Koeffizient der Hydroxyliganden ist, |
| $a_2$ | der stöchiometrische Koeffizient der Hydrogencarbonatliganden ist, |
| $a_3$ | der stöchiometrische Koeffizient der Carbonatliganden ist, |
| x und y | die stöchiometrischen Koeffizienten der einzelnen Struktureinheiten der Saccharidkette sind und |
| n | der Polymerisationsgrad der Polysaccharidkette, aufgebaut aus den obigen Struktureinheiten, ist, |

mit der Maßgabe, daß ein beliebiger Koeffizient von $a_1$, $a_2$ und $a_3$ Null sein kann und die Summe aus $a_1$, $a_2$ und $2a_3$ gleich 0,7•(z-1) oder größer ist und der Maximalwert der Summe aus $a_1$, $a_2$ und $2a_3$ gleich z-1 ist.

**2.** Verfahren zur Herstellung eines Metallkomplexes der Formel (I), in dem $M^{z+}$, z, $M^+$, $Ps^-$, Ps, $a_1$, $a_2$, $a_3$, x, y und n wie in Anspruch 1 definiert sind, dadurch charakterisiert, daß

a) ein Alkalimetallsalz eines sauren Oligo- oder Polysaccharides vorzugsweise direkt in der Reaktionsmischung, in der es mit einem Salz eines Metallions $M^{z+}$ gebildet wird, gebildet mit einem anorganischen Anion oder mit einem Komplex eines Metallions $M^{z+}$ mit niedrigerer Stabilitätskonstante als der des sauren Polysaccharidmetallionkomplexes, gebildet mit einem organischen Liganden, umgesetzt wird, wobei die Reaktion

(i) zur Einführung eines zweiwertigen Metallions $M^{z+}$ in Anwesenheit von 0,1 bis 1,1 Moläquivalenten eines Alkalimetallhydroxids, -carbonats und/oder -hydrogencarbonats, berechnet auf ein Moläquivalent des Ausgangs-Oligo- oder Polysaccharid-Alkalimetallsalzes, oder

(ii) zur Einführung eines dreiwertigen Metallions $M^{z+}$ in Anwesenheit von 0,1 bis 2,1 Moläquivalenten eines Alkalimetallhydroxids, -carbonats und/oder -hydrogencarbonats, berechnet auf ein Moläquivalent des Ausgangs-Oligo- oder Polysaccharid-Alkalimetallsalzes,

ausgeführt wird und das Salz oder der Komplex des Metallions $M^{z+}$ in einer Menge von 0,7 - 1,1 Äquivalenten verwendet wird, berechnet für die Gesamtmenge der vorhandenen Alkalimetallverbindungen; oder

b) ein saures Oligo- oder Polysaccharid entweder als solches oder als sein Ester oder partieller Ester mit dem Oxid, Hydroxid, Carbonat oder Hydrogencarbonat des einzuführenden Metallions $M^{z+}$ umgesetzt wird, wobei die Verbindung des Metallions $M^{z+}$

(i) zur Einführung eines zweiwertigen Metallions $M^{z+}$ in einer Menge von 0,55 bis 1 Metallatom, berechnet auf eine vorhandene Carboxylgruppe oder veresterte Carboxylgruppe, oder

(ii) zur Einführung eines dreiwertigen Metallions $M^{z+}$ in einer Menge von 0,36 bis 1 Metallatom, berechnet für eine vorhandene Carboxylgruppe oder veresterte Carboxylgruppe

angewandt wird und, falls gewünscht, jede beliebige vorhandene veresterte Carboxylgruppe mit einem Alkalimetalloxid, -hydroxid, -hydrogencarbonat oder -carbonat verseift wird,

mit der Maßgabe, daß die in den oben genannten Verfahren a) und b) verwendete Menge an Metallhydroxid, -carbonat und/oder -hydrogencarbonat so eingestellt wird, um sicherzustellen, daß die Summe aus $a_1 + a_2 + 2a_3$ in dem Produkt der Formel (I)0,7•(z-1) oder größer ist.

**3.** Pharmazeutische oder veterinäre Zusammensetzung, die als aktiven Inhaltsstoff eine Verbindung der Formel (I), in der $M^{z+}$, z, $M^+$, $Ps^-$, Ps, $a_1$, $a_2$, $a_3$, x, y und n wie in Anspruch 1 definiert sind, zusammen mit einer herkömmlichen, pharmazeutisch zulässigen Trägersubstanz, einem Verdünnungsmittel und/oder einem anderen Hilfsmittel enthält.

**4.** Frucht-oder Gemüsesaft, ergänzt mit einer Quelle essentieller Metallionen, dadurch charakterisiert, daß eine Verbindung der Formel (I), in der $M^{z+}$, z, $M^+$, $Ps^-$, Ps, $a_1$, $a_2$, $a_3$, x, y und n wie in Anspruch 1 definiert sind, in einer Menge von 0,1 - 1 Gew.-%, zusammen mit Frucht- oder Gemüsesaft oder -mark, Zucker oder einem künstlichen Süßstoff und gegebenenfalls einem oder mehreren herkömmlichen Zusätzen enthalten ist.

**5.** Fruchthaltiges Gel, ergänzt mit einer Quelle essentieller Metallionen, das Fruchtmark, Zucker oder einen künstlichen Süßstoff, ein gelbildendes Mittel und gegebenenfalls einen oder mehrere herkömmliche Zusätze enthält, dadurch charakterisiert, daß es als gelbildendes Mittel eine 10:1-1:10 -Mischung (w/w) aus einer Verbindung der Formel (I), in der $M^{z+}$, z, $M^+$, $Ps^-$, Ps, $a_1$, $a_2$, $a_3$, x, y und n wie in Anspruch 1 definiert sind, und einem herkömmlichen gelbildenden Mittel enthält.

**Patentansprüche für folgenden Vertragsstaat : ES**

**1.** Verfahren zur Herstellung eines Metallkomplexes der Formel

$$\{[M^{z+}Ps^-_{[z-(a_1+a_2+2a_3)]}(OH^-)_{a_1}(HCO_3^-)_{a_2}(CO_3^{2-})_{a_3}](M^+Ps^-)_x(Ps)_y\}_n \quad (I)$$

in der

| | |
|---|---|
| $M^{z+}$ | ein Erdalkalimetallion und/oder ein Übergangsmetallion mit 3d Orbitalen ist, einschließlich positiver Ionen, die aus solchen Übergangsmetallionen und Sauerstoffatomen bestehen, |
| z | gleich 2 oder 3 ist und die Ladungszahl des Kations $M^{z+}$ ist, |
| $M^+$ | ein Alkalimetallion ist, |

| | |
|---|---|
| $Ps^-$ | eine monomere Einheit einer sauren Oligo- oder Polysaccharidkette bedeutet, die eine Carboxylatgruppe enthält, |
| Ps | eine neutrale Saccharidmonomereinheit einer sauren Oligo- oder Poly saccharidkette bedeutet, |
| $a_1$ | der stöchiometrische Koeffizient der Hydroxyliganden ist, |
| $a_2$ | der stöchiometrische Koeffizient der Hydrogencarbonatliganden ist, |
| $a_3$ | der stöchiometrische Koeffizient der Carbonatliganden ist, |
| x und y | die stöchiometrischen Koeffizienten der einzelnen Struktureinheiten der Saccharidkette sind und |
| n | der Polymerisationsgrad der Polysaccharidkette, aufgebaut aus den oberen Struktureinheiten, ist, |

mit der Maßgabe, daß ein beliebiger Koeffizient von $a_1$, $a_2$ und $a_3$ Null sein kann und die Summe aus $a_1$, $a_2$ und $2a_3$ gleich $0{,}7 \cdot (z-1)$ oder größer ist und der Maximalwert der Summe aus $a_1$, $a_2$ und $2a_3$ gleich z-1 ist.

dadurch charakterisiert, daß

a) ein Alkalimetallsalz eines sauren Oligo- oder Polysaccharids vorzugsweise direkt in der Reaktionsmischung, in der es mit einen, Salz eines Metallions $M^{z+}$ gebildet wird, gebildet mit einem anorganischen Anion oder mit einem Komplex eines Metallions $M^{z+}$ mit niedrigerer Stabilitätskonstante als der des sauren Polysaccharidmetallionkomplexes, gebildet mit einem organischen Liganden, umgesetzt wird, wobei die Reaktion

(i) zur Einführung eines zweiwertigen Metallions $M^{z+}$ in Anwesenheit von 0,1 bis 1,1 Moläquivalenten eines Alkalimetallhydroxids, -carbonats und/oder -hydrogencarbonats, berechnet auf ein Moläquivalent des Ausgangs-Oligo- oder Polysaccharid-Alkalimetallsalzes, oder

(ii) zur Einführung eines dreiwertigen Metallions $M^{z+}$ in Anwesenheit von 0,1 bis 2,1 Moläquivalenten eines Alkalimetallhydroxids, -carbonats und/oder -hydrogencarbonats, berechnet auf ein Moläquivalent des Ausgangs-Oligo- oder Polysaccharid-Alkalimetallsalzes,

ausgeführt wird und das Salz oder der Komplex des Metallions $M^{z+}$ in einer Menge von 0,7 - 1,1 Äquivalenten verwendet wird, berechnet für die Gesamtmenge der vorhandenen Alkalimetallverbindungen; oder

b) ein saures Oligo- oder Polysaccharid entweder als solches oder als sein Ester oder partieller Ester mit dem Oxid, Hydroxid, Carbonat oder Hydrogencarbonat des einzuführenden Metallions $M^{z+}$ umgesetzt wird, wobei die Verbindung des Metallions $M^{z+}$

(i) zur Einführung eines zweiwertigen Metallions $M^{z+}$ in einer Menge von 0,55 bis 1 Metallatom, berechnet auf eine vorhandene Carboxylgruppe oder veresterte Carboxylgruppe, oder

(ii) zur Einführung eines dreiwertigen Metallions $M^{z+}$ in einer Menge von 0,36 bis 1 Metallatom, berechnet für eine vorhandene Carboxylgruppe oder veresterte Carboxylgruppe

angewandt wird und, falls gewünscht, jede beliebige vorhandene veresterte Carboxylgruppe mit einem Alkalimetalloxid, -hydroxid, -hydrogencarbonat oder -carbonat verseift wird,

mit der Maßgabe, daß die in den oben genannten Verfahren a) und b) verwendete Menge an Metallhydroxid, -carbonat und/oder -hydrogencarbonat so eingestellt wird, um sicherzustellen, daß die Summe aus $a_1 + a_2 + 2a_3$ in dem Produkt der Formel(I) $0{,}7 \bullet (z-1)$ oder größer ist.

**2.** Verfahren zur Herstellung einer pharmazeutischen oder veterinären Zusammensetzung durch Zumischen einer Verbindung der Formel (I) als aktiven Inhaltsstoff, in der $M^{z+}$, z, $M^+$, $Ps^-$, Ps, $a_1$, $a_2$, $a_3$, x, y und n wie in Anspruch 1 definiert sind, zu einer herkömmlichen, pharmazeutisch zulässigen Trägersubstanz, einem Verdünnungsmitteln und/oder einem anderen Hilfsmittel.

**3.** Verfahren zur Herstellung eines Frucht- oder Gemüsesaftes, der eine Quelle essentieller Metallionen enthält, charakterisiert durch Zumischen einer Verbindung der Formel (I), in der $M^{z+}$, z, $M^+$, $Ps^-$, Ps, $a_1$, $a_2$, $a_3$, x, y und n wie in Anspruch 1 definiert sind, in einer Menge von 0,1 - 1 Gew.-%, zu einem Frucht -oder Gemüsesaft oder -mark, Zucker oder einem künstlichen Süßstoff und gegebenenfalls einem oder mehreren herkömmlichen Zusätzen.

**4.** Verfahren zur Herstellung eines mit einer Quelle essentieller Metallionen ergänzten fruchthaltigen Gels, das Fruchtmark, Zucker oder einen künstlichen Süßstoff, ein gelbildendes Mittel und gegebenenfalls einen oder mehrere herkömmliche Zusätze enthält, welches dadurch charakterisiert ist, daß man als gelbildendes Mittel eine 10 : 1-1 : 10-Mischung (w/w) aus einer Verbindung der Formel (I), in der $M^{z+}$, z, $M^+$, $Ps^-$, Ps, $a_1$, $a_2$, $a_3$, x, y und n wie in Anspruch 1 definiert sind, und einem herkömmlichen

gelbildenden Mittel verwendet.

**Revendications**

**Revendications pour les Etats contractants suivants : AT, BE, CH, DE, FR, GB, IT, LI, LU, NL, SE**

**1.** Complexe métallique de formule

$$\{[M^{z+}Ps^{-}_{[z-(a_1+a_2+2a_3)]}(OH^{-})_{a_1}(HCO_3^{-})_{a_2}(CO_3^{2-})_{a_3}](M^{+}Ps^{-})_{x}(Ps)_{y}\}_{n} \quad (I)$$

dans lequel

- $M^{z+}$ est un ion métallique alcalino-terreux et/ou un ion de métal de transition avec une orbite 3d, incluant les ions positifs composés de tels ions de métal de transition et d'atomes d'oxygène,
- z est égal à 2 ou 3 et est le nombre de charge du cation $M^{z+}$,
- $M^{+}$ est un ion de métal alcalin,
- $Ps^{-}$ représente un motif monomère d'une chaîne oligo- ou polysaccharide acide comprenant un groupe carboxylate,
- Ps représente un motif monomère de saccharide neutre d'une chaîne oligo- ou polysaccharide acide,
- $a_1$ est le coefficient stoechiométrique des ligands hydroxyle,
- $a_2$ est le coefficient stoechiométrique des ligands hydrocarbonate,
- $a_3$ est le coefficient stoechiométrique des ligands carbonate,
- x et y sont les coefficients stoechiométriques des motifs structuraux individuels de la chaîne de saccharide, et
- n est le degré de polymérisation de la chaîne de polysaccharide construite à partir des motifs structuraux ci-dessus,

à condition que l'un quelconque de $a_1$, $a_2$ et $a_3$ puisse être égal à zéro et que la somme de $a_1$, $a_2$ et $2a_3$ vaille $0{,}7\cdot(z-1)$ ou plus et la valeur maximale de la somme de $a_1$, $a_2$ et $2a_3$ est égale à z-1.

**2.** Procédé pour la préparation d'un complexe de métal de formule (I), dans lequel $M^{z+}$, z, $M^{+}$, $Ps^{-}$, Ps, $a_1$, $a_2$, $a_3$, x, y et n sont tels que définis dans la revendication 1, caractérisé en ce que

a) on fait réagir un sel de métal alcalin d'un oligo- ou polysaccharide acide, de préférence directement dans le mélange réactionnel où il est formé, avec un sel d'ion métallique $M^{z+}$ formé avec un anion minéral ou avec un complexe d'un ion métallique $M^{z+}$ de constante de stabilité inférieure à celle du complexe d'ion métallique-polysaccharide acide, formé avec un ligand organique, la réaction étant réalisée

(i) pour introduire un ion métallique bivalent $M^{z+}$ en présence de 0,1 à 1,1 équivalents molaires d'un hydroxyde, d'un carbonate et/ou d'un hydrocarbonate de métal alcalin calculé pour un équivalent molaire du sel de métal alcalin d'oligo- ou de polysaccharide de départ, ou

(ii) pour introduire un ion métallique trivalent $M^{z+}$ enprésence de 0,1 à 2,1 équivalents molaires d'un hydroxyde, d'un carbonate et/ou d'un hydrocarbonate de métal alcalin calculé pour un équivalent molaire du sel de métal alcalin d'oligo- ou de polysaccharide de départ,

et ledit sel ou complexe d'ion métallique $M^{z+}$ est utilisé à raison de 0,7 à 1,1 équivalents calculés pour la quantité totale de composés de métal alcalin présents; ou

b) on fait réagir un oligo- ou polysaccharide acide, soit tel quel, soit sous forme de son ester ou de son ester partiel, avec l'oxyde, l'hydroxyde, le carbonate ou l'hydrocarbonate de l'ion métallique $M^{z+}$ à introduire, ledit composé de l'ion métallique $M^{z+}$ étant appliqué

(i) pour introduire un ion métallique bivalent $M^{z+}$ à raison de 0,55 à 1 atome de métal calculé pour un groupe carboxy ou un groupe carboxy estérifié présent, ou

(ii) pour introduire un ion métallique trivalent $M^{z+}$ àraison de 0,36 à 1 atome de métal calculé pour un groupe carboxy ou un groupe carboxy estérifié présent,

et, si souhaité, on saponifie tout groupe carboxy estérifié présent avec un oxyde, hydroxyde, hydrocarbonate ou carbonate de métal alcalin,

à condition que la quantité de l'hydroxyde, le carbonate et/ou l'hydrocarbonate métallique employée dans les traitements a) et b) ci-dessus soit ajustée de façon à s'assurer que la somme de $a_1$ + $a_2$

+ $2a_3$ dans le produit de formule (I) vaille 0,7•(z-1) ou plus.

**3.** Composition pharmaceutique ou vétérinaire comprenant comme principe actif un composé de formule (I), dans lequel $M^{z+}$, z, $M^+$, $Ps^-$, Ps, $a_1$, $a_2$, $a_3$, x, y et n sont définis dans la revendication 1, conjointement avec un porteur classique acceptable sur le plan pharmaceutique, un diluant et/ou un autre agent auxiliaire.

**4.** Jus de fruit ou jus de légume supplémenté avec une source d'ion métallique essentiel, caractérisé par en ce qu'il contient un composé de formule (I), dans laquelle $M^{z+}$,z, $M^+$, $Ps^-$, Ps, $a_1$, $a_2$, $a_3$, x, y et n sont tels que définis dans la revendication 1, à raison de 0,1 à 1% en poids, conjointement avec un jus ou pulpe de fruit ou de légume, un sucre ou un édulcorant artificiel, et éventuellement un ou plusieurs additifs classiques.

**5.** Gel contenant des fruits supplémenté avec une source d'ion métallique essentiel, comprenant de la pulpe de fruit, du sucre ou un édulcorant artificiel, un agent gélifiant et éventuellement un ou plusieurs additifs classiques, caractérisé en ce qu'il contient comme agent gélifiant un mélange p/p 10:1 à 1:10 d'un composé de formule (I), dans laquelle $M^{z+}$, z, $M^+$, $Ps^-$, Ps, $a_1$, $a_2$, $a_3$, x, y et n sont tels que définis dans la revendication 1, et d'un agent gélifiant classique.

**Revendications pour l'Etat contractant suivant : ES**

**1.** Procédé pour la préparation d'un complexe métallique de formule

$$\{[M^{z+}Ps^-_{[z-(a_1+a_2+2a_3)]}(OH^-)_{a_1}(HCO_3^-)_{a_2}(CO_3^{2-})_{a_3}](M^+Ps^-)_x(Ps)_y\}_n \quad (I)$$

dans lequel

- $M^{z+}$ est un ion métallique alcalino-terreux et/ou un ion de métal de transition avec une orbite 3d, incluant les ions positifs composés de tels ions de métal de transition et d'atomes d'oxygène,
- z est égal à 2 ou 3 et est le nombre de charge du cation $M^{z+}$,
- $M^+$ est un ion de métal alcalin,
- $Ps^-$ représente un motif monomère d'une chaîne oligo- ou polysaccharide acide comprenant un groupe carboxylate,
- Ps représente un motif monomère de saccharide neutre d'une chaîne oligo- ou polysaccharide acide,
- $a_1$ est le coefficient stoechiométrique des ligands hydroxyle,
- $a_2$ est le coefficient stoechiométrique des ligands hydrocarbonate,
- $a_3$ est le coefficient stoechiométrique des ligands carbonate,
- x et y sont les coefficients stoechiométriques des motifs structuraux individuels de la chaîne de saccharide, et
- n est le degré de polymérisation de la chaîne de polysaccharide construite à partir des motifs structuraux ci-dessus,

à condition que l'un quelconque de $a_1$, $a_2$ et $a_3$ puisse être égal à zéro et que la somme de $a_1$, $a_2$ et $2a_3$ vaille 0,7•(z-1) ou plus et la valeur maximale de la somme de $a_1$, $a_2$ et $2a_3$ est égale à z-1,
caractérisé en ce que

a) on fait réagir un sel de métal alcalin d'un oligo- ou polysaccharide acide, de préférence directement dans le mélange réactionnel où il est formé, avec un sel d'ion métallique $M^{z+}$ formé avec un anion minéral ou avec un complexe d'un ion métallique $M^{z+}$ de constante de stabilité inférieure à celle du complexe d'ion métallique de polysaccharide acide, formé avec un ligand organique, la réaction étant réalisée

(i) pour introduire un ion métallique bivalent $M^{z+}$ en présence de 0,1 à 1,1 équivalents molaires d'un hydroxyde, d'un carbonate et/ou d'un hydrocarbonate de métal alcalin calculé pour un équivalent molaire du sel de métal alcalin d'oligo- ou de polysaccharide de départ, ou

(ii) pour introduire un ion métallique trivalent $M^{z+}$ enprésence de 0,1 à 2,1 équivalents molaires d'un hydroxyde, d'un carbonate et/ou d'un hydrocarbonate de métal alcalin calculé pour un équivalent molaire du sel de métal alcalin oligo-ou polysaccharide de départ,

et ledit sel ou complexe d'ion métallique $M^{z+}$ est utilisé à raison de 0,7 à 1,1 équivalents calculés pour la quantité totale de composés de métal alcalin présents; ou
b) on fait réagir un oligo- ou polysaccharide acide, soit tel quel, soit sous forme de son ester ou son ester partiel, avec l'oxyde, l'hydroxyde, le carbonate ou l'hydrocarbonate de l'ion métallique $M^{z+}$ à introduire, ledit composé de l'ion métallique $M^{z+}$ étant appliqué
(i) pour introduire un ion métallique bivalent $M^{z+}$ à raison de 0,55 à 1 atome de métal calculé pour un groupe carboxy ou un groupe carboxy estérifié présent, ou
(ii) pour introduire un ion métallique trivalent $M^{z+}$ àraison de 0,36 à 1 atome de métal calculé pour un groupe carboxy ou un groupe carboxy estérifié présent,
et, si souhaité, on saponifie tout groupe carboxy estérifié présent avec un oxyde, hydroxyde, hydrocarbonate ou carbonate de métal alcalin,
à condition que la quantité d'hydroxyde, de carbonate et/ou d'hydrocarbonate métallique employés dans les traitements a) et b) ci-dessus soit ajustée de façon à s'assurer que la somme de $a_1 + a_2 + 2a_3$ dans le produit de formule (I) vaille $0{,}7 \cdot (z\text{-}1)$ ou plus.

**2.** Procédé pour préparer une composition pharmaceutique ou vétérinaire en mélangeant un composé de formule (I), dans laquelle $M^{z+}$, z, $M^+$, $Ps^-$, Ps, $a_1$, $a_2$, $a_3$, x, y et n sont tels que définis dans la revendication 1, comme principe actif avec un porteur classique acceptable sur le plan pharmaceutique, un diluant et/ou un autre agent auxiliaire.

**3.** Procédé pour préparer un jus de fruit ou jus de légume supplémenté avec une source d'ion métallique essentiel, caractérisé par le mélange d'un composé de formule (I), dans laquelle $M^{z+}$, z, $M^+$, $Ps^-$, Ps, $a_1$, $a_2$, $a_3$, x, y et n sont tels que définis dans la revendication 1, à raison de 0,1 à 1% en poids, avec un jus ou pulpe de fruit ou de légume, un sucre ou un édulcorant artificiel, et éventuellement un ou plusieurs additifs classiques.

**4.** Procédé pour préparer un gel contenant des fruits supplémenté avec une source d'ion métallique essentiel, comprenant de la pulpe de fruit, du sucre ou un édulcorant artificiel, un agent gélifiant et éventuellement un ou plusieurs additifs classiques, caractérisé par l'utilisation en tant qu'agent gélifiant d'un mélange p/p 10:1 à 1:10 d'un composé de formule (I), dans laquelle $M^{z+}$, z, $M^+$, $Ps^-$, Ps, $a_1$, $a_2$, $a_3$, x, y et n sont tels que définis dans la revendication 1, et d'un agent gélifiant classique.

$$\left[M^{z+} P\bar{s}_{(z-/a_1+a_2+2a_3/)}(OH^-)_{a_1}(HCO_3^-)_{a_2}(CO_3^{2-})_{a_3}\right](M^+P\bar{s})_x(Ps)_y\Big\}_n \quad (I)$$

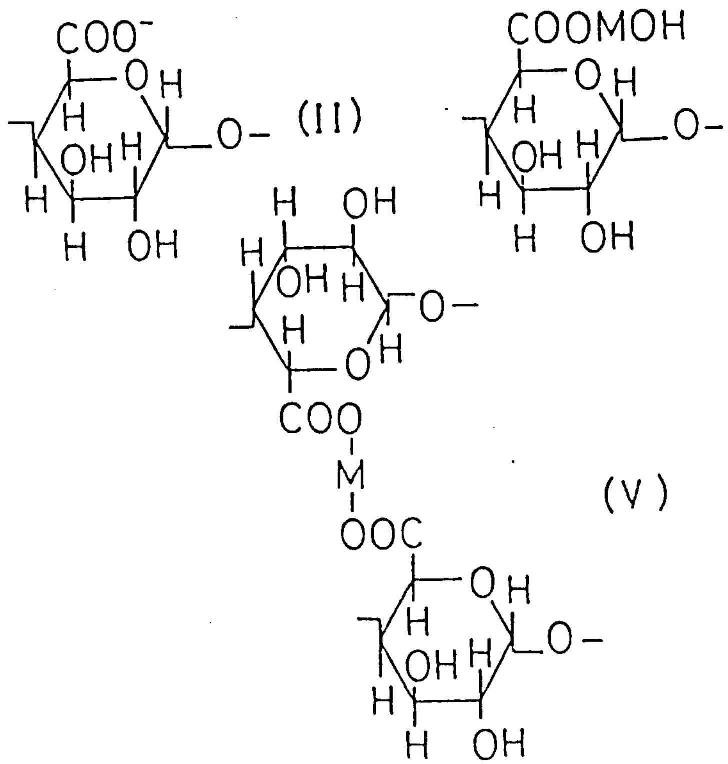

(II) (III)

(V)

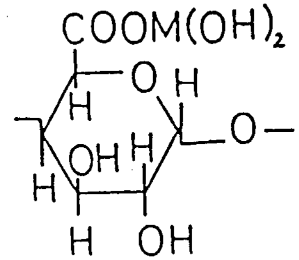

(IV)

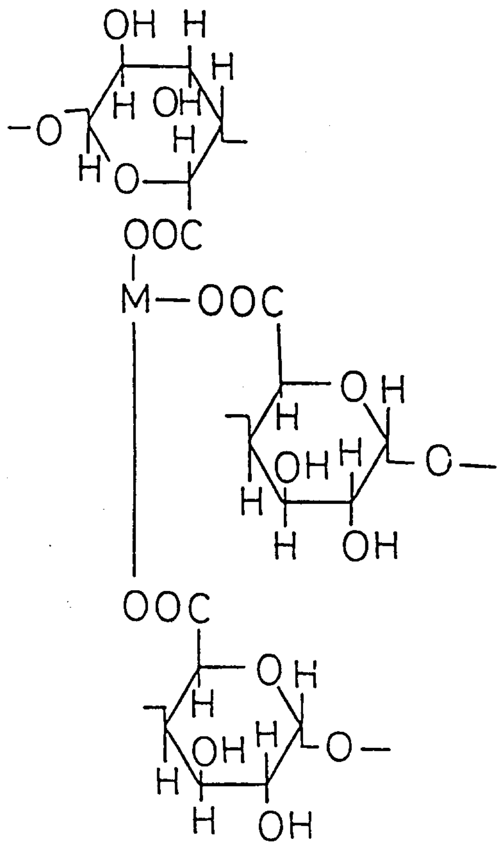

(VI)

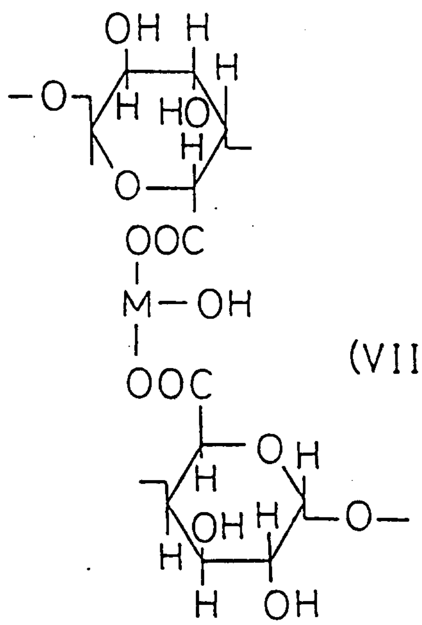

(VII)